# EUROPÄISCHE PATENTSCHRIFT

(11) **EP 3 093 182 B1**
(45) Veröffentlichungstag und Bekanntmachung des Hinweises auf die Patenterteilung: **23.06.2021**
(21) Anmeldenummer: 16165647.5
(22) Anmeldetag: 15.04.2016
(51) Int. Cl.: B60K 37/06

(54) **FORTBEWEGUNGSMITTEL, ARBEITSMASCHINE, ANWENDERSCHNITTSTELLE UND VERFAHREN ZUR ANZEIGE EINES INHALTES EINER ERSTEN ANZEIGEEINRICHTUNG AUF EINER ZWEITEN ANZEIGEEINRICHTUNG**
MEANS OF LOCOMOTION, WORKING MACHINE, USER INTERFACE AND METHOD FOR DISPLAYING THE CONTENT OF A FIRST DISPLAY DEVICE ON A SECOND DISPLAY DEVICE
MOYEN DE DEPLACEMENT, MACHINE DE TRAVAIL, INTERFACE UTILISATEUR ET PROCEDE D'AFFICHAGE D'UN CONTENU D'UN PREMIER DISPOSITIF D'AFFICHAGE SUR UN SECOND DISPOSITIF D'AFFICHAGE

(30) Priorität: 06.05.2015 DE 102015208363
(43) Veröffentlichungstag der Anmeldung: 16.11.2016
(73) Patentinhaber: Volkswagen Aktiengesellschaft, 38440 Wolfsburg (DE)
(72) Erfinder: Gowarzewski, Maximilian, 10557 Berlin (DE)

(56) Entgegenhaltungen:
- DE-A1-102012 210 403
- GB-A- 2 502 595
- US-A1- 2009 195 372

## Beschreibung

### Stand der Technik

Die vorliegende Erfindung betrifft ein Fortbewegungsmittel, eine Arbeitsmaschine, eine Anwenderschnittstelle sowie ein Verfahren zur Anzeige eines Inhaltes einer ersten Anzeigeeinrichtung auf einer zweiten Anzeigeeinrichtung. Insbesondere betrifft die vorliegende Erfindung eine Unterstützung eines Anwenders eines Fortbewegungsmittels bei einer optischen Erfassung eines ersten Anzeigeinhaltes während der Wahrnehmung einer Fahr- bzw. Arbeitsaufgabe.

Im Stand der Technik werden vermehrt berührungsempfindliche Anzeigeeinrichtungen (Englisch "Touchscreen") in Anwenderschnittstellen für Fortbewegungsmittel und Arbeitsmaschinen verwendet, um deren zunehmenden Funktionsumfang zugreifen und Rückmeldungen von der Anwenderschnittstelle optisch erfassen zu können. Ausgerechnet dort im Fahrzeug, wo üblicherweise die immer größer werdenden Touchscreens angeordnet sind, ist der Blick des Fahrers jedoch vergleichsweise stark vom Straßengeschehen abgewandt (Mittelkonsole beziehungsweise zentrale Position im Armaturenbrett). Während die große Fläche eines Touchscreens eine bequeme Eingabe ermöglicht, verringert die Notwendigkeit einer optischen Erfassung der Rückmeldung der Anwenderschnittstelle über den Touchscreen die maximal mögliche Verkehrs- bzw. Arbeitssicherheit.

DE 10 2013 214 326 A1 offenbart ein Verfahren zum Betreiben einer Eingabevorrichtung, bei welcher eine frei im Raum ausgeführte Geste von einem berührungsfrei arbeitenden Sensor erfasst und anschließend ausgewertet wird. Dabei wird eine virtuelle Oberfläche als Eingabeoberfläche festgelegt, sodass die Eingabe getrennt von einer ebenfalls vorgesehenen Anzeigeeinheit erfolgt.

DE 196 53 595 C1 offenbart ein Informationsanzeigesystem, bei welcher eine Bedienung mechanischer Interaktionselemente mittels einer Kamera aufgenommen und das Kamerabild in einem bequem vom Anwender erfassbaren Bereich angezeigt wird. Auf diese Weise können das Umfeld einer Arbeitsmaschine beziehungsweise eines Fortbewegungsmittels und das Bedienszenario zeitgleich und komfortabel vom Anwender optisch erfasst werden.

GB 2,502,595 A offenbart ein Verfahren zum Spiegeln eines Anzeigeinhaltes eines mobilen Anwendergerätes auf ein fahrzeugbasiertes Display. Um die Funktionen des mobilen Anwenderendgerätes einfacher bedienen zu können, werden Anwendereingaben auf dem fahrzeugbasierten Display interpretiert und an das mobile Anwenderendgerät gesendet, welches korrespondierende Funktionen auslösen kann.

DE 10 2012 210 403 A1 offenbart ein Verfahren und eine Vorrichtung für Eingaben in graphische Benutzerschnittstellen durch Fahrer eines Fahrzeugs. Wenn der Anwender auf einem ersten Bildschirm Eingaben tätigt, kann ein auf dem ersten Bildschirm dargestellter Anzeigeinhalt in eine Anzeige eines Head-Up-Displays kopiert/gespiegelt werden.

US 2009/0195372 A1 offenbart eine Anwenderschnittstelle, bei welcher mittels einer Kamera die Hand eines Bedieners erfasst und mittels einer Steuereinheit ein skaliertes Abbild des Fingers des Bedieners dargestellt wird.

Ausgehend vom vorgenannten Stand der Technik ist es eine Aufgabe der vorliegenden Erfindung, eine optische Erfassung eines Bildschirminhaltes komfortabler und bei gleichzeitiger Wahrnehmung anderer Aufgaben sicherer zu gestalten.

### Offenbarung der Erfindung

Die vorstehend identifizierte Aufgabe wird erfindungsgemäß, wie in dem Anspruch 1 aufgeführt, durch ein Verfahren zur Anzeige eines Inhaltes einer ersten Anzeigeeinrichtung auf einer zweiten Anzeigeeinrichtung gelöst. Der Inhalt kann als "Bildschirminhalt", "Anzeigeinhalt" beziehungsweise als Bestandteil einer graphischen Anwenderoberfläche verstanden werden. In einem ersten Schritt wird ein Auswahlmittel (z. B. ein Finger, eine Hand, ein Stylus o.ä.) in einem vordefinierten Raumbereich vor der ersten Anzeigeeinrichtung erfasst. Insbesondere wird der Eintritt des Auswahlmittels erfasst und als Trigger für den nachfolgenden Schritt verwendet. Unter der Ortsdefinition "vor" der ersten Anzeigeeinrichtung angeordneten Raumbereich sei im Rahmen der vorliegenden Erfindung ein solcher Raumbereich verstanden, welcher gerade keinen Kontakt mit der Oberfläche der ersten Anzeigeeinrichtung aufweist. Insbesondere ist ein Mindestabstand von beispielsweise einem Millimeter zur ersten Anzeigeeinrichtung für den vordefinierten Raumbereich von der ersten Anzeigeeinrichtung vorgesehen. Im Ansprechen auf das Erfassen des Auswahlmittels wird ein auf der ersten Anzeigeeinrichtung angezeigter Inhalt auch auf der zweiten Anzeigeeinrichtung angezeigt. Mit anderen Worten wird zumindest ein Teil des graphischen Inhaltes der ersten Anzeigeeinrichtung auf der zweiten Anzeigeeinrichtung dargeboten beziehungsweise auf die zweite Anzeigeeinrichtung "kopiert". Auf diese Weise ist es möglich, die Auswirkung der Bedienhandlung in Verbindung mit der ersten Anzeigeeinrichtung auf der zweiten Anzeigeeinrichtung zu verfolgen oder beispielsweise einen Text bequemer zu lesen. Insbesondere für den Fall, dass die zweite Anzeigeeinrichtung an einer ergonomisch günstigeren Position innerhalb eines Fortbewegungsmittels oder einer Arbeitsmaschine angeordnet ist, kann eine Abwendung eines Blickes des Anwenders vom Umfeld des Fortbewegungsmittels beziehungsweise der Arbeitsmaschine vermieden werden, wodurch die Betriebssicherheit erheblich erhöht und Ermüdungserscheinungen hinausgezögert werden können. Zur Beruhigung der optischen Erscheinung der zweiten Anzeigeeinrichtung wird der auf der zweiten Anzeigeeinrichtung angezeigte Inhalt fixiert beziehungsweise arretieren, bis das Auswahlmittel eine vordefinierte minimale Positionsänderung erfahren hat. Mit anderen Worten kann eine Anpassung des auf der zweiten Anzeigeeinrichtung dargestellten Ausschnittes des Inhaltes stufenweise erfolgen und zwar jeweils dann, wenn das Auswahlmittel um ein Mindestmaß (eine Stufe) innerhalb des vordefinierten Raumbereiches bewegt worden ist. Insbesondere muss eine solche Bewegung eine parallele Komponente zur Oberfläche der ersten Anzeigeeinrichtung aufweisen, sodass derjenige Flächenbereich, über welchem das Auswahlmittel aktuell angeordnet ist, eine entsprechende Änderung erfahren hat. Kleinere Bewegungen führen somit nicht zu einer Anpassung des auf der zweiten Anzeigeeinrichtung angezeigten Inhaltes, sodass eine optische Erfassung durch den Anwender begünstigt wird.

Die Unteransprüche zeigen bevorzugte Weiterbildungen der Erfindung.

Bevorzugt kann sichergestellt werden, dass eine vordefinierte Zeitdauer nach dem Erfassen des Auswahlmittels und vor dem Anzeigen des Inhaltes auf der zweiten Anzeigeeinrichtung verstrichen ist. Mit anderen Worten erfolgt das Anzeigen des Inhaltes auf der zweiten Anzeigeeinrichtung nach dem Erfassen des Auswahlmittels im vordefinierten Raumbereich verzögert, sodass ein kurzfristiges Eindringen in den vordefinierten Raumbereich oder Durchkreuzen des vordefinierten Raumbereiches nicht zu einer unbeabsichtigten Anzeige des Inhaltes auf der zweiten Anzeigeeinrichtung führt. Dies vermeidet ein unruhiges Erscheinungsbild der Anwenderschnittstelle.

Die erste Anzeigeeinrichtung kann beispielsweise ein berührungsempfindlicher Bildschirm sein, dessen Anzeigefläche größer als diejenige der zweiten Anzeigeeinrichtung ist. Auf diese Weise kann die zweite Anzeigeeinrichtung auch an Positionen innerhalb einer technischen Einrichtung angeordnet werden, für welche der Touchscreen zu groß und / oder zu schlecht bedienbar wäre (z. B. hinter einer Steuereinrichtung, einem Lenkrad o. ä.). Die größere Fläche des Touchscreens ermöglicht jedoch eine bessere Auflösung von Anwendergesten, sodass der Eingabekomfort nicht vermindert wird.

Zur besseren Orientierung des Anwenders bei der Bedienung der ersten Anzeigeeinrichtung kann ein die aktuelle Position des Auswahlmittels repräsentierendes Anzeigeelement auf der zweiten Anzeigeeinrichtung angezeigt werden, um dem Anwender eine optische Rückmeldung darüber zu geben, über welchem Bereich des Inhaltes das Eingabemittel aktuell angeordnet ist. Das Anzeigeelement kann beispielsweise ein Cursor, ein Fadenkreuz, ein Handsymbol o. ä. sein. Das Anzeigeelement kann deckend oder zumindest anteilig transparent ausgestaltet sein.

Sofern der auf der ersten Anzeigeeinrichtung dargestellte Inhalt ein bedienbares Anzeigeelement (eine Schaltfläche, ein Button, ein Listenelement o. ä.) aufweist, kann in dem Falle, dass das Auswahlmittel mit einer aktuellen Position des Anzeigeelementes auf der ersten Anzeigeeinrichtung korrespondiert, das entsprechend auf der zweiten Anzeigeeinrichtung dargestellte Anzeigeelement optisch hervorgehoben werden. Beispielsweise kann dessen Farbe invertiert, eine Helligkeit und / oder ein Kontrast angepasst, eine farbig hervorgehobene Rahmenlinie um das Anzeigeelement dargestellt o. ä. werden, um dem Anwender die Möglichkeit zu veranschaulichen, durch eine Bestätigung der aktuellen Position das Anzeigeelement auszuwählen. Auf diese Weise kann auf ein die aktuelle Position des Auswahlmittels unmittelbar repräsentierendes Anzeigeelement (s.o.) verzichtet werden, wodurch der dargestellte Inhalt beruhigt werden kann.

Die zweite Anzeigeeinrichtung kann beispielsweise eine Datenbrille umfassen, wie sie zur Erzeugung einer erweiterten Realität (engl. "Augmented Reality") häufig Verwendung findet. Alternativ oder zusätzlich kann die zweite Anzeigeeinrichtung in einem Kombiinstrument und / oder in einem Head-Up-Display angeordnet sein. Die vorgenannten Ausgestaltungen für die zweite Anzeigeeinrichtung ermöglichen eine besonders komfortable optische Erfassung des Inhaltes.

Insbesondere für den Fall, dass die zweite Anzeigeeinrichtung eine gegenüber der ersten Anzeigeeinrichtung verkleinerte Anzeigefläche aufweist, kann der auf der zweiten Anzeigeeinrichtung angezeigte Inhalt lediglich einen Teilbereich des auf der ersten Anzeigeeinrichtung angezeigten Inhaltes umfassen, welcher insbesondere einer Position des Auswahlmittels räumlich nächstgelegen ist. Ein solcher Teilbereich wird auch als "Ausschnitt" einer Darstellung bezeichnet. Sofern der Inhalt der ersten Anzeigeeinrichtung mehrere Anzeigeelemente (z.B. Fenster oder Elemente) aufweist, kann auch eine besonders beruhigte Darstellung dadurch erzeugt werden, dass nur das jeweils dem Auswahlmittel räumlich am engsten zugeordnete Anzeigeelement auch auf der zweiten Anzeigeeinrichtung dargestellt wird.

Durch ein vordefiniertes Kommando (z.B. eine vordefinierte Geste (Doppelklick in der Luft o.ä.) und/oder ein Sprachkommando) kann der Anwender optional eine derartige Fixierung des Inhaltes auf der zweiten Anzeigeeinrichtung vornehmen, dass er das Auswahlmittel gänzlich aus dem vordefinierten Raumbereich entfernen kann, ohne den Inhalt auf der zweiten Anzeigeeinrichtung dadurch zu beeinflussen. Ein entsprechendes zweites Kommando oder ein Wiedereintritt in den vordefinierten Raumbereich kann die Fixierung lösen. Dies ermöglicht ein komfortables Studium des Inhaltes (z.B. einer Textnachricht, einer Email o.ä.) durch den Anwender.

Um zu vermeiden, dass eine jede Annäherung an die erste Anzeigeeinrichtung zu einer erfindungsgemäßen Anzeige auf der zweiten Anzeigeeinrichtung führt, kann eine vordefinierte Geste beziehungsweise kann eine vordefinierte Menge von Gesten vorgesehen sein, welche die erfindungsgemäße Anzeige des auf der ersten Anzeigeeinrichtung angezeigten Inhaltes auf der zweiten Anzeigeeinrichtung veranlasst. Alternativ oder zusätzlich kann ein vordefiniertes Sprachkommando vorgesehen sein, im Ansprechen auf welches die Ausführung des erfindungsgemäßen Verfahrens initial ermöglicht wird.

Die vordefinierte Geste zum Starten des erfindungsgemäßen Verfahrens kann beispielsweise eine Berührung zweier Fingerspitzen (z. B. ein Finger und ein entsprechender Daumen) umfassen, wodurch ein Lupensymbol stilisiert wird. Eine solche Geste ist zur Hervorhebung eines darunterliegenden Inhaltes besonders intuitiv für den Anwender. Eine oben prinzipiell beschriebene Fixierung des Inhaltes kann nun z.B. durch Auflösen der Geste (z.B. Öffnen der Hand) erfolgen. Alternativ oder zusätzlich kann ein im Wesentlichen ortsfestes Verweilen des Auswahlmittels für eine vordefinierte Zeitdauer dazu führen, dass der unter beziehungsweise hinter dem Auswahlmittel angeordnete Inhalt der ersten Anzeigeeinrichtung auch auf der zweiten Anzeigeeinrichtung dargestellt wird. "Im Wesentlichen" bedeutet in diesem Zusammenhang, dass unbeabsichtigte Bewegungen des Auswahlmittels (z. B. aufgrund einer Ausführung eines Arbeitsschrittes oder einer Fahrt durch unwegsames Gelände) die Zeitmessung nicht beenden. Alternativ oder zusätzlich kann eine Finger-Zueinander-Geste (Englisch "Pinch") und alternativ oder zusätzliche eine Finger-Auseinander-Geste (Englisch "Spread") zum Starten des erfindungsgemäßen Anzeigeverfahrens vordefiniert sein. Die vordefinierten Gesten ermöglichen eine Vermeidung einer unbeabsichtigten Veranlassung eines erfindungsgemäßen Kopiervorgangs von Anzeigeinhalten auf die zweite Anzeigeeinrichtung.

Gemäß einem zweiten Aspekt der vorliegenden Erfindung, gemäß Anspruch 10, wird eine Anwenderschnittstelle für ein Fortbewegungsmittel vorgeschlagen. Die Anwenderschnittstelle umfasst eine erste Anzeigeeinrichtung, eine zweite Anzeigeeinrichtung, eine Erfassungseinrichtung und eine Auswerteeinrichtung.

Die Erfassungseinrichtung kann einen kapazitiven Sensor umfassen, wie er beispielsweise für die Schwebe-Gesten-Erfassung beim Samsung Galaxy S4 (eingetragene Marken) Verwendung finden. Alternativ oder zusätzlich kann eine optische Erfassung der Auswahlmittel erfolgen. Alternativ oder zusätzlich kann eine Infrarot-LED- Leiste, wie sie in Verbindung mit der Erfassung frei im Raum ausgeführter Gesten in Fortbewegungsmitteln bekannt ist, zur Erfassung und Auflösung von Gesten mittels eines Auswahlmittels im vordefinierten Raumbereich verwendet werden. Die Auswerteeinrichtung kann beispielsweise einen programmierbaren Prozessor, einen Micro-Controller, einen Nano-Controller o. ä. umfassen. Auf diese Weise ist die erfindungsgemäße Anwenderschnittstelle eingerichtet, mittels der Erfassungseinrichtung ein Auswahlmittel (z. B. ein Finger, eine Hand, ein Stylus) eines Anwenders in einem vordefinierten Raumbereich vor (also nicht auf) der ersten Anzeigeeinrichtung zu erfassen. Die Auswerteeinrichtung ist eingerichtet im Ansprechen auf das erfasste Auswahlmittel einen auf der ersten Anzeigeeinrichtung angezeigten Inhalt (auch) auf der zweiten Anzeigeeinrichtung anzuzeigen. Zumindest ein Teilbereich des auf der ersten Anzeigeeinrichtung angezeigten Bildschirminhaltes wird also auf die zweite Anzeigeeinrichtung kopiert.

Hierbei können, obwohl der wesentliche Inhalt unverändert bleibt, unterschiedliche Parameter (z. B. Größe, Ansichtsverhältnis, Farbgebung etc.) an die für die zweite Anzeigeeinrichtung verwendete technische Einrichtung angepasst werden.

Die erfindungsgemäße Anwenderschnittstelle ist also eingerichtet, ein Verfahren auszuführen, wie es in Verbindung mit dem erstgenannten Erfindungsaspekt im Detail beschrieben worden ist, sodass zur Vermeidung von Wiederholungen auf die entsprechenden Ausführungen verwiesen wird.

Gemäß einem dritten Aspekt der vorliegenden Erfindung wird ein Computerprogrammprodukt vorgeschlagen, welches Instruktionen umfasst, die, wenn sie auf einer Auswerteeinrichtung einer Anwenderschnittstelle gemäß dem zweitgenannten Erfindungsaspekt ausgeführt werden, die Anwenderschnittstelle veranlassen, die Schritte eines Verfahrens gemäß dem erstgenannten Erfindungsaspekt auszuführen. Das Computerprogrammprodukt kann beispielsweise eine Diskette, eine CD, eine DVD, eine Blu-ray-Disk, ein Flash-Speicher, eine Festplatte, RAM / ROM etc. sein.

Gemäß einem vierten Aspekt der vorliegenden Erfindung wird eine Signalfolge repräsentierend Instruktionen vorgeschlagen, welche, wenn sie auf einer Auswerteeinrichtung einer Anwenderschnittstelle gemäß dem zweitgenannten Erfindungsaspekt ausgeführt werden, die Anwenderschnittstelle veranlassen, die Schritte eines Verfahrens gemäß dem ersten genannten Erfindungsaspekt auszuführen. Auf diese Weise werden die Schritte des erfindungsgemäßen Verfahrens auch für den Fall unter Schutz gestellt, dass die für ihre EDVtechnische Verbreitung erforderlichen Speichermittel außerhalb des Geltungsbereiches der beigefügten Ansprüche angeordnet sind.

Gemäß einem fünften Aspekt der vorliegenden Erfindung wird eine Arbeitsmaschine (z. B. ein Kran, eine Werkzeugmaschine o. ä.) vorgeschlagen, welche eine Anwenderschnittstelle gemäß dem zweitgenannten Erfindungsaspekt umfasst. Die Arbeitsmaschine kann eingerichtet sein, mindestens einen Anwenderarbeitsplatz mit Sicht auf die Umgebung der Arbeitsmaschine aufzuweisen, wobei der Arbeitsplatz durch die Anwenderschnittstelle ergonomischer und sicherer gestaltet wird.

Gemäß einem sechsten Aspekt der vorliegenden Erfindung wird ein Fortbewegungsmittel (z. B. ein LKW, ein Transporter, ein Motorrad, ein Luft- und / oder Wasserfahrzeug) vorgeschlagen, welches eine Anwenderschnittstelle gemäß dem zweitgenannten Erfindungsaspekt aufweist.

Sämtliche Erfindungsaspekte verwirklichen die Merkmale, Merkmalskombinationen und die sich aus diesem ergebenen Vorteile des en Detail beschriebenen Verfahrens in entsprechender Weise, weshalb zur Vermeidung von Wiederholungen auf die obigen Ausführungen verwiesen wird.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine Prinzipskizze eines Ausführungsbeispiels eines erfindungsgemäßen Fortbewegungsmittels in welchem Komponenten eines Ausführungsbeispiels einer erfindungsgemäßen Anwenderschnittstelle angeordnet sind;
- Figur 2: eine Prinzipskizze veranschaulichend unterschiedliche Ausführungsformen für zweite Anzeigeeinrichtungen; und
- Figur 3: ein Flussdiagramm veranschaulichend Schritte eines Ausführungsbeispiels eines erfindungsgemäßen Verfahrens zur Anzeige eines Inhaltes einer ersten Anzeigeeinrichtung auf einer zweiten Anzeigeeinrichtung.

### Ausführungsformen der Erfindung

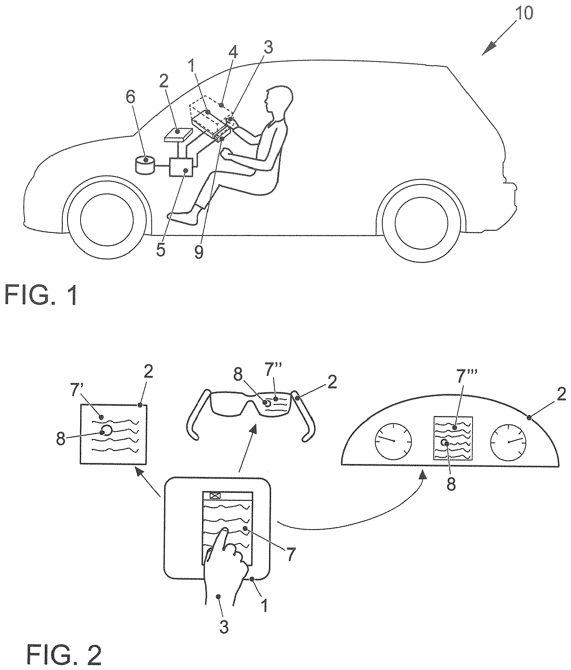

Figur 1 zeigt einen PKW 10 als Ausführungsbeispiel eines erfindungsgemäßen Fortbewegungsmittels, in dessen Armaturenbrett ein zentrales Informationsdisplay in Form eines Touchscreens 1 angeordnet und informationstechnisch mit einem elektronischen Steuergerät 5 als Auswerteeinrichtung verbunden ist. Das elektronische Steuergerät 5 ist zudem mit einer unterhalb des Touchscreens 1 angeordneten Infrarot-LED-Leiste 9 als Erfassungseinrichtung informationstechnisch verbunden, welche einen vordefinierten Raumbereich 4 in Form eines Parallelepipeds vor dem Touchscreen 1 aufspannt, innerhalb dessen eine Annäherung einer Hand 3 als Auswahlmittel sensorisch erfasst werden kann. Der vordefinierte Raumbereich 4 endet nur wenige Millimeter vor einer Oberfläche des Touchscreens 1, um die erfindungsgemäß vorgesehene Annäherung von einer berührenden Eingabe unterscheiden zu können. Sofern erfindungsgemäß eine Annäherung der Hand 3 an den Touchscreen 1 erfolgt, wird ein im Bereich der Hand 3 angezeigter Inhalt des Touchscreens 1 zusätzlich über ein Head-Up-Display 2 als zweite Anzeigeeinrichtung angezeigt, dessen Inhalt der Anwender ergonomischer und ohne den Blick vom Verkehrsgeschehen abzuwenden erfassen kann. Zudem ist ein Speichermittel 6 informationstechnisch mit dem elektronischen Steuergerät 5 verbunden, in welchem Referenzen für vordefinierte Annäherungsgesten und Instruktionen zur Ausführung der erfindungsgemäß vorgeschlagenen Verfahrensschritte gespeichert sind.

Figur 2 zeigt eine Hand 3 eines Anwenders als Auswahlmittel über einer E-Mail 7 als auf dem Touchscreen 1 angezeigter Inhalt. Die Annäherung der Hand 3 über der E-Mail 7 führt dazu, dass unterschiedliche Ausschnitte 7', 7", 7'" der E-Mail 7 auf einem Head-Up-Display als zweite Anzeigeeinrichtung 2, in einer Datenbrille als zweite Anzeigeeinrichtung 2 sowie in einem Bildschirm eines Kombiinstrumentes als zweite Anzeigeeinrichtung 2 angezeigt werden. Zur verbesserten Orientierung für den Anwender wird auf der jeweiligen zweiten Anzeigeeinrichtung 2 auch eine Position mit einem Anzeigeelement 8 markiert, welche mit derjenigen Position über der E-Mail 7 auf der ersten Anzeigeeinrichtung korrespondiert, über welcher der Zeigefinger der Hand 3 des Anwenders aktuell verweilt. Auf diese Weise erhält der Anwender auch über die zweite Anzeigeeinrichtung 2 eine Orientierung, an welcher Stelle sich der Zeigefinger seiner Hand 3 aktuell befindet.

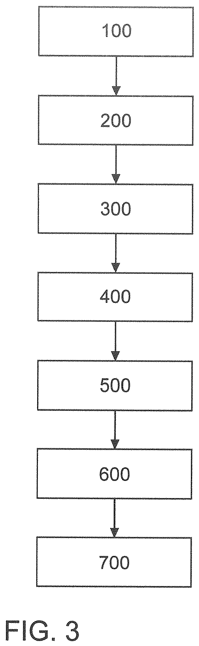

Figur 3 zeigt Schritte eines Verfahrens zur Anzeige eines Inhaltes einer ersten Anzeigeeinrichtung auf einer zweiten Anzeigeeinrichtung. In Schritt 100 wird eine mittels eines Auswahlmittels ausgeführte vordefinierte Geste erkannt. Die vordefinierte Geste umfasst eine stilisierte Lupe, bei welcher sich die Fingerspitzen des Daumens und des Mittelfingers einer Hand des Anwenders berühren, sodass der Daumen in Verbindung mit dem Mittelfinger einen Kreis beschreibt. In Schritt 200 wird diese Geste in einem vordefinierten Raumbereich vor der ersten Anzeigeeinrichtung sensorisch erfasst. In Schritt 300 wird sichergestellt, dass eine vordefinierte Zeitdauer verstreicht, bevor in Schritt 400 ein auf der ersten Anzeigeeinrichtung angezeigter Inhalt auch auf der zweiten Anzeigeeinrichtung angezeigt wird. Auf diese Weise wird die Erscheinung der zweiten Anzeigeeinrichtung beruhigt. Um die optische Erscheinung der zweiten Anzeigeeinrichtung zusätzlich zu beruhigen, wird der auf der zweiten Anzeigeeinrichtung angezeigte Inhalt in Schritt 500 fixiert, bis das Auswahlmittel eine vordefinierte minimale Positionsänderung erfahren hat. In Schritt 600 wird ein auf der ersten Anzeigeeinrichtung mit einer aktuellen Position des Auswahlmittels korrespondierendes Anzeigeelement in Form einer Schaltfläche auf der zweiten Anzeigeeinrichtung optisch hervorgehoben. Zusätzlich wird in Schritt 700 ein die aktuelle Position des Auswahlmittels repräsentierendes Anzeigeelement auf der zweiten Anzeigeeinrichtung angezeigt, um die Orientierung und die Ergonomie bei der Bedienung der erfindungsgemäßen Anwenderschnittstelle weiter zu verbessern.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Touchscreen
- 2: zweite Anzeigeeinrichtung
- 3: Hand des Anwenders
- 4: vordefinierter Raumbereich
- 5: elektronisches Steuergerät
- 6: Datenspeicher
- 7: E-Mail
- 7', 7", 7'": Ausschnitte der Email
- 8: Anzeigeelement
- 9: Infrarot-LED-Leiste
- 10: PKW
- 100 - 700: Verfahrensschritte

## Patentansprüche

1. Verfahren zur Anzeige eines Inhaltes einer ersten Anzeigeeinrichtung (1) auf einer zweiten Anzeigeeinrichtung (2) aufweisend die Schritte:
- Erfassen (200) eines Auswahlmittels (3) in einem vordefinierten Raumbereich (4) vor der ersten Anzeigeeinrichtung (1) und im Ansprechen darauf
- Anzeigen (400) eines auf der ersten Anzeigeeinrichtung (1) angezeigten Inhaltes (7) auf der zweiten Anzeigeeinrichtung (2), **gekennzeichnet durch**
- Fixieren (500) des auf der zweiten Anzeigeeinrichtung (2) angezeigten Inhaltes, bis das Auswahlmittel (3) eine vordefinierte minimale Positionsänderung erfahren hat.

2. Verfahren nach Anspruch 1 weiter umfassend
- Sicherstellen (300), dass eine vordefinierte Zeitdauer nach dem Erfassen des Auswahlmittels (3) und dem Anzeigen des Inhaltes (7) auf der zweiten Anzeigeeinrichtung (2) verstrichen ist.

3. Verfahren nach Anspruch 1 oder 2, wobei die erste Anzeigeeinrichtung (1) ein berührungsempfindlicher Bildschirm ist, und insbesondere eine größere Anzeigefläche als die zweite Anzeigeeinrichtung (2) aufweist.

4. Verfahren nach einem der vorstehenden Ansprüche weiter umfassend
- Anzeigen (700) eines die aktuelle Position des Auswahlmittels (3) repräsentierenden Anzeigeelementes (8) auf der zweiten Anzeigeeinrichtung (2).

5. Verfahren nach einem der vorstehenden Ansprüche weiter umfassend
- Hervorheben (600) eines auf der ersten Anzeigeeinrichtung (1) mit einer aktuellen Position des Auswahlmittels (3) korrespondierenden Anzeigeelementes auf der zweiten Anzeigeeinrichtung (2).

6. Verfahren nach einem der vorstehenden Ansprüche, wobei die zweite Anzeigeeinrichtung (2)
- eine Datenbrille und/oder
- ein Kombiinstrument und/oder
- ein Head-up-Display
umfasst.

7. Verfahren nach einem der vorstehenden Ansprüche, wobei der auf der zweiten Anzeigeeinrichtung (2) angezeigte Inhalt lediglich einen dem Auswahlmittel (3) räumlich zugeordneten Teilbereich (7', 7", 7"') des auf der ersten Anzeigeeinheit (1) angezeigten Inhaltes (7) umfasst.

8. Verfahren nach einem der vorstehenden Ansprüche weiter umfassend
- Erkennen (100) einer mittels des Auswahlmittels (3) ausgeführten vordefinierten Geste oder eines vordefinierten Sprachkommandos und im Ansprechen darauf
- Anzeigen (400) des auf der ersten Anzeigeeinrichtung (1) angezeigten Inhaltes (7) auf der zweiten Anzeigeeinrichtung (2).

9. Verfahren nach Anspruch 8, wobei die vordefinierte Geste
- eine Berührung zweier Fingerspitzen und/oder
- ein im Wesentlichen ortsfestes Verweilen des Auswahlmittels (3) für eine vordefinierte Zeitdauer und/oder
- eine Finger-Zueinander-Geste und/oder
- eine Finger-Auseinander-Geste
umfasst.

10. Anwenderschnittstelle für ein Fortbewegungsmittel (10) umfassend:
- eine erste Anzeigeeinrichtung (1),
- eine zweite Anzeigeeinrichtung (2),
- eine Erfassungseinrichtung (9), und
- eine Auswerteeinrichtung (5),
**dadurch gekennzeichnet, dass**
- die Erfassungseinrichtung (9) eingerichtet ist, ein Auswahlmittel (3) in einem vordefinierten Raumbereich (4) vor der ersten Anzeigeeinrichtung (1) zu erfassen und
- die Auswerteinrichtung (5) eingerichtet ist, im Ansprechen darauf
- einen auf der ersten Anzeigeeinrichtung (1) angezeigten Inhalt (7) auf der zweiten Anzeigeeinrichtung (2) anzuzeigen,
**dadurch gekennzeichnet, dass** die Auswerteinrichtung (5) weiter eingerichtet ist,
- den auf der zweiten Anzeigeeinrichtung (2) angezeigten Inhalt zu fixieren, bis das Auswahlmittel (3) eine vordefinierte minimale Positionsänderung erfahren hat.

11. Anwenderschnittstelle nach Anspruch 10, welche eingerichtet ist, ein Verfahren nach einem der vorstehenden Ansprüche 1 bis 9 auszuführen.

12. Computerprogrammprodukt umfassend Instruktionen, welche, wenn Sie auf einer Auswerteeinrichtung (5) einer Anwenderschnittstelle nach einem der Ansprüche 10 oder 11 ausgeführt werden, die Anwenderschnittstelle veranlassen, die Schritte eines Verfahrens nach einem der Ansprüche 1 bis 9 auszuführen.

13. Signalfolge repräsentierend Instruktionen, welche, wenn Sie auf einer Auswerteeinrichtung (5) einer Anwenderschnittstelle nach einem der Ansprüche 10 oder 11 ausgeführt werden, die Anwenderschnittstelle veranlassen, die Schritte eines Verfahrens nach einem der Ansprüche 1 bis 9 auszuführen.

14. Arbeitsmaschine umfassend eine Anwenderschnittstelle nach einem der vorstehenden Ansprüche 10 oder 11.

15. Fortbewegungsmittel umfassend eine Anwenderschnittstelle nach einem der vorstehenden Ansprüche 10 oder 11.

## Claims

1. Method for displaying content of a display device (1) on a second display device (2), having the steps of: = capturing (200) a selection means (3) in a predefined spatial region (4) in front of the first display device (1), and, as a reaction thereto,
- displaying (400) a content (7) displayed on the first display device (1) on the second display device (2), **characterized by**
- fixing the content displayed on the second display device (2) until the selection means (3) has undergone a predefined minimum position change.

2. Method according to Claim 1, furthermore comprising
- ensuring (300) that a predefined time duration after the capturing of the selection means (3) and the displaying of the content (7) on the second display device (2) has passed.

3. Method according to Claim 1 or 2, wherein the first display device (1) is a touch-sensitive screen and in particular has a larger display area than the second display device (2).

4. Method according to one of the preceding claims, furthermore comprising
- displaying (700) a display element (8) representative of the current position of the selection means (3) on the second display device (2).

5. Method according to one of the preceding claims, furthermore comprising
- highlighting (600) on the second display device (2) a display element that corresponds to a current position of the selection means (3) on the first display device (1) .

6. Method according to one of the preceding claims, wherein the second display device (2) comprises
- smartglasses and/or
- an instrument cluster and/or
- a head-up display.

7. Method according to one of the preceding claims, wherein content displayed on the second display device (2) comprises merely a partial region (7', 7", 7"'), which is spatially assigned to the selection means (3), of the content (7) displayed on the first display unit (1) .

8. Method according to one of the preceding claims, furthermore comprising
- recognizing (100) a predefined gesture performed by means of the selection means (3) or a predefined voice command, and, as a reaction thereto,
= displaying (400) the content (7) displayed on the first display device (1) on the second display device (2) .

9. Method according to Claim 8, wherein the predefined gesture comprises
- a touch by two fingertips and/or
- a substantially stationary dwelling of the selection means (3) for a predefined time duration, and/or
- a finger-together gesture, and/or
- a finger-apart gesture.

10. User interface for a transport means (10), comprising:
- a first display device (1),
- a second display device (2),
- a capturing device (9) and
- an evaluation device (5),
**characterized in that**
- the capturing device (9) is configured to capture a selection means (3) in a predefined spatial region (4) in front of the first display device (1), and
- the evaluation device (5) is configured to display, as a reaction thereto,
- a content (7) displayed on the first display device (1) on the second display device (2),
**characterized in that** the evaluation device (5) is furthermore configured to
- fix the content displayed on the second display device (2) until the selection means (3) has undergone a predefined minimum position change.

11. User interface according to Claim 10, which is configured to carry out a method according to one of the preceding Claims 1 to 9.

12. Computer program product, comprising instructions which, when they are executed on an evaluation device (5) of a user interface according to either of Claims 10 and 11, cause the user interface to carry out the steps of a method according to one of Claims 1 to 9.

13. Signal sequence representing instructions which, when they are executed on an evaluation device (5) of a user interface according to either of Claims 10 and 11, cause the user interface to perform the steps of a method according to one of Claims 1 to 9.

14. Machine comprising a user interface according to either of the preceding Claims 10 and 11.

15. Transport means, comprising a user interface according to either of the preceding Claims 10 and 11.

## Revendications

1. Procédé pour afficher un contenu d'un premier dispositif d'affichage (1) sur un deuxième dispositif d'affichage (2), comprenant les étapes suivantes :
- la détection (200) d'un moyen de sélection (3) dans une zone d'espace (4) prédéfinie devant le premier dispositif d'affichage (1) et, en réaction à ceci
- l'affichage (400) sur le deuxième dispositif d'affichage (2) d'un contenu (7) affiché sur le premier dispositif d'affichage (1), **caractérisé par**
- le blocage (500) du contenu affiché sur le deuxième dispositif d'affichage (2) jusqu'à ce que le moyen de sélection (3) ait subi un changement de position minimal prédéfini.

2. Procédé selon la revendication 1, comprenant en outre
- la vérification (300) qu'une durée prédéfinie s'est écoulée après la détection du moyen de sélection (3) et l'affichage du contenu (7) sur le deuxième dispositif d'affichage (2).

3. Procédé selon la revendication 1 ou 2, le premier dispositif d'affichage (1) étant un écran tactile et possédant notamment une surface d'affichage plus grande que le deuxième dispositif d'affichage (2).

4. Procédé selon l'une des revendications précédentes, comprenant en outre
- l'affichage (700) sur le deuxième dispositif d'affichage (2) d'un élément d'affichage (8) représentant la position actuelle du moyen de sélection (3).

5. Procédé selon l'une des revendications précédentes, comprenant en outre
- la mise en valeur (600) sur le deuxième dispositif d'affichage (2) d'un élément d'affichage sur le premier dispositif d'affichage (1) correspondant à une position actuelle du moyen de sélection (3).

6. Procédé selon l'une des revendications précédentes, le deuxième dispositif d'affichage (2) comportant
- une paire de lunettes connectée et/ou
- un instrument combiné et/ou
- un afficheur tête haute.

7. Procédé selon l'une des revendications précédentes, le contenu affiché sur le deuxième dispositif d'affichage (2) comprenant uniquement une zone partielle (7', 7", 7"') associée au moyen de sélection (3) du contenu (7) affiché sur le premier dispositif d'affichage (1).

8. Procédé selon l'une des revendications précédentes, comprenant en outre
- la reconnaissance (100) d'un geste prédéfini accompli par le biais du moyen de sélection (3) ou d'une instruction vocale prédéfinie et, en réaction à ceci
- l'affichage (400) sur le deuxième dispositif d'affichage (2) du contenu (7) affiché sur le premier dispositif d'affichage (1).

9. Procédé selon la revendication 8, le geste prédéfini comprenant
- un toucher avec deux pointes de doigt et/ou
- un séjour sensiblement en position fixe du moyen de sélection (3) pendant une durée prédéfinie et/ou
- un geste de rapprochement mutuel des doigts et/ou
- un geste d'espacement mutuel des doigts.

10. Interface utilisateur pour un moyen de transport (10), comprenant :
- un premier dispositif d'affichage (1),
- un deuxième dispositif d'affichage (2),
- un dispositif de détection (9) et
- un dispositif d'interprétation (5),
**caractérisée en ce que**
- le dispositif de détection (9) est conçu pour détecter un moyen de sélection (3) dans une zone d'espace (4) prédéfinie devant le premier dispositif d'affichage (1) et
- le dispositif d'interprétation (5) est conçu pour, en réaction à cela
- afficher sur le deuxième dispositif d'affichage (2) un contenu (7) affiché sur le premier dispositif d'affichage (1),
**caractérisée** en ce le dispositif d'interprétation (5) est en outre conçu pour
- bloquer le contenu affiché sur le deuxième dispositif d'affichage (2) jusqu'à ce que le moyen de sélection (3) ait subi un changement de position minimal prédéfini.

11. Interface utilisateur selon la revendication 10, conçue en outre pour mettre en œuvre un procédé selon l'une des revendications 1 à 9.

12. Produit de programme informatique comprenant des instructions qui, lorsqu'elles sont exécutées sur un dispositif d'interprétation (5) d'une interface utilisateur selon l'une des revendications 10 et 11, amènent l'interface utilisateur à exécuter les étapes d'un procédé selon l'une des revendications 1 à 9.

13. Séquence de signaux représentant des instructions qui, lorsqu'elles sont exécutées sur un dispositif d'interprétation (5) d'une interface utilisateur selon l'une des revendications 10 et 11, amènent l'interface utilisateur à exécuter les étapes d'un procédé selon l'une des revendications 1 à 9.

14. Machine de travail comprenant une interface utilisateur selon l'une des revendications précédentes 10 et 11.

15. Moyen de transport comprenant une interface utilisateur selon l'une des revendications précédentes 10 et 11.
